# EUROPÄISCHE PATENTSCHRIFT

(11) **EP 3 411 944 B1**
(45) Veröffentlichungstag und Bekanntmachung des Hinweises auf die Patenterteilung: **01.04.2020**
(21) Anmeldenummer: 17702633.3
(22) Anmeldetag: 02.02.2017
(51) Int. Cl.: H02M 1/12, H02M 5/458

(54) **RÜCKSPEISEFÄHIGE GLEICHRICHTERVORRICHTUNG**
BIDIRECTIONAL RECTIFIER DEVICE
SYSTEME REDRESSEUR AYANT UNE CAPACITE DE RETOUR

(30) Priorität: 08.03.2016 EP 16159163
(43) Veröffentlichungstag der Anmeldung: 12.12.2018
(73) Patentinhaber: Siemens Aktiengesellschaft, 80333 München (DE)
(72) Erfinder: GÖPFRICH, Kurt, 96050 Bamberg (DE); SCHIERLING, Hubert, 91052 Erlangen (DE)
(86) Internationale Anmeldenummer: PCT/EP2017/052240
(87) Internationale Veröffentlichungsnummer: WO 2017/153096

(56) Entgegenhaltungen:
- EP-A2- 1 760 870
- DE-A1-102011 078 304
- US-A1- 2010 259 955
- US-A1- 2014 055 033

## Beschreibung

Die Erfindung betrifft eine rückspeisefähige Gleichrichtervorrichtung zum Anschluss an ein Wechselstromnetz. Die rückspeisefähige Gleichrichtervorrichtung weist einen rückspeisefähigen Gleichrichter auf und ist insbesondere ein Bestandteil einer Industrieanlage. Die Erfindung betrifft ferner ein Verfahren zum Betrieb einer rückspeisefähigen Gleichrichtervorrichtung und eine Industrieanlage mit einer rückspeisefähigen Gleichrichtervorrichtung.

Industrieanlagen weisen üblicherweise eine Vielzahl an Antrieben auf, die jeweils einen Elektromotor umfassen. Die Bestromung des Motors erfolgt hierbei mittels eines Umrichters, der einen Gleichrichter, einen Zwischenkreis und einen Wechselrichter aufweist. Der Wechselrichter ist elektrisch mit dem Elektromotor kontaktiert und dient der Einstellung der Drehzahl und der Leistung des Elektromotors. Der Gleichrichter hingegen ist an ein Wechselstromnetz angeschlossen, welches drei Phasen aufweist, die jeweils einen Wechselstrom führen, wobei die einzelnen Phasen üblicherweise zueinander um 120° versetzt sind. In der einfachsten Ausgestaltung weist der Gleichrichter sechs Dioden auf, die in einer sogenannten Brückenschaltung miteinander kontaktiert sind. Der Gleichrichterseite der Brückenschaltung ist ein Zwischenkreiskondensator parallel geschaltet, mittels dessen die zwischen dem Gleichrichter und dem Wechselrichter anliegende Zwischenkreisspannung stabilisiert werden soll.

Bei Betrieb der Industrieanlage treten Zeitfenster auf, innerhalb derer der Elektromotor abgebremst werden soll. Um einen vergleichsweise effizienten Betrieb der Industrieanlage zu gewährleisten, wird der Elektromotor hierbei generatorisch betrieben und folglich Rotationsenergie in elektrische Energie umgewandelt. Mittels dieser wird der Zwischenkreiskondensator gespeist. In einer Weiterentwicklung wird der Gleichrichter rückspeisefähig ausgestaltet, sodass die rückgewonnene elektrische Energie erneut in das Wechselstromnetz eingespeist wird, und folglich anderen Verbrauchern des Wechselstromnetzes zur Verfügung steht. Infolgedessen ist eine kleinere Dimensionierung des Zwischenkreiskondensators ermöglicht.

Um den Gleichrichter rückspeisefähig auszugestalten, sind die Dioden mittels Halbleiterschalter überbrückt, die folglich zu diesen parallel geschaltet sind. Der elektrische Strom wird in diejenige der drei Phasen des Wechselstromnetzes eingespeist, die die höchste Spannung aufweist, um einen möglichst großen Energieübertrag zu ermöglichen. Infolgedessen wird zum Zeitpunkt, zu dem von einer Phase auf eine weitere Phase geschaltet (kommutiert) wird, ein vergleichsweise großer elektrischer Strom geschaltet. Auch ist aufgrund des vergleichsweise abrupten Schaltens und aufgrund von etwaig vorhandenen Induktivitäten eine Ausbildung von unerwünschten Schwingungen innerhalb des rückgespeisten Stroms möglich.

In EP 1 760 870 A2 ist ein Weitspannungs-Umrichter mit einem netz- und einem lastseitigen Stromrichter offenbart. Der netzseitige Stromrichter und der lastseitige Stromrichter sind mittels eines Hochsetzstellers elektrisch verbunden.

DE 10 2011 078 A1 zeigt ein Verfahren zur Reduktion von Ableitströmen in einem Frequenzumrichter.

Aus DE 2014/0055033 A1 ist eine Ansteuerschaltung für eine Leuchtstoffröhre bekannt.

US 2010/0259955 A1 offenbart einen Soft-Switching Umrichter.

Der Erfindung liegt die Aufgabe zugrunde, eine besonders geeignete rückspeisefähige Gleichrichtervorrichtung sowie ein besonders geeignetes Verfahren zum Betrieb einer rückspeisefähigen Gleichrichtervorrichtung als auch eine besonders geeignete Industrieanlage mit einer rückspeisefähigen Gleichrichtervorrichtung anzugeben, wobei vorzugsweise bei Betrieb eine Ausbildung von Schwingungen innerhalb des rückgespeisten Stromes verringert ist.

Hinsichtlich des Verfahrens wird diese Aufgabe durch die Merkmale des Anspruchs 1, hinsichtlich der rückspeisefähigen Gleichrichtervorrichtung durch die Merkmale des Anspruchs 7 und hinsichtlich der Industrieanlage durch die Merkmale des Anspruchs 11 erfindungsgemäß gelöst. Vorteilhafte Weiterbildungen und Ausgestaltungen sind Gegenstand der jeweiligen Unteransprüche.

Das Verfahren dient dem Betrieb einer rückspeisefähigen Gleichrichtervorrichtung, die beispielsweise ein Bestandteil einer Industrieanlage ist, und die geeignet, vorzugsweise vorgesehen und eingerichtet ist, an ein Wechselstromnetz angeschlossen zu werden. Die rückspeisefähige Gleichrichtervorrichtung umfasst einen rückspeisefähigen Gleichrichter, und eine zu der Gleichstromseite des rückspeisefähigen Gleichrichters parallel geschaltete Pufferkapazität, wobei im Montagezustand die Wechselstromseite des rückspeisefähigen Gleichrichters mit dem Wechselstromnetz elektrisch kontaktiert ist.

Das Verfahren sieht vor, dass ein Stromfluss zwischen dem rückspeisefähigen Gleichrichter und der Pufferkapazität zum Zeitpunkt einer Kommutierung reduziert wird. Unter Kommutierung wird hierbei insbesondere der Übergang des Stromflusses von einem Zweig der Brückenschaltung des rückspeisefähigen Gleitrichters auf einen weiteren der Zweige bezeichnet und/oder eine Änderung der elektrischen Kontaktierung eines Zweiges des Zwischenkreises mit einer der Phasen des Wechselstromnetzes. Zur Kommutierung erfolgt beispielsweise ein Schaltvorgang eines Gleichrichterschaltelements des rückspeisefähigen Gleichrichters, wobei eines dieser Gleichrichterschaltelemente geöffnet und ein weiteres geschlossen wird, sodass einer der Zweige des Zwischenkreises elektrisch niederohmig mit einer anderen Phase des Wechselstromnetzes elektrisch kontaktiert ist.

Beispielsweise wird zum Zeitpunkt der Kommutierung ein elektrischer Stromfluss von der Gleichstromseite zu der Pufferkapazität oder von der Pufferkapazität zur Gleichstromseite reduziert. Vorzugsweise wird sowohl ein Stromfluss von der Gleichstromseite zur Pufferkapazität als auch von der Pufferkapazität zur Gleichstromseite zum Zeitpunkt einer Kommutierung reduziert. Insbesondere herrscht im Falle einer Rückspeisung ein elektrischer Stromfluss von der Pufferkapazität zur Gleichstromseite, wobei zum Zeitpunkt der Kommutierung der elektrische Stromfluss reduziert wird, beispielsweise auf 0 A.

Aufgrund der Reduzierung des elektrischen Stromflusses wird bei der Kommutierung ein vergleichsweise geringer elektrischer Strom geschaltet, was Schaltverluste reduziert. Auch ist eine Ausbreitung von Schwingungen innerhalb des Wechselstromnetzes reduziert. Geeigneterweise wird der Stromfluss eine Zeitspanne vor und eine Zeitspanne nach dem Zeitpunkt der Kommutierung reduziert, wobei dies beispielsweise kontinuierlich erfolgt. Auf diese Weise ist eine Ausbreitung von elektrischen Schwingungen weiter reduziert. Beispielsweise beträgt die Zeitspanne zwischen 2 ms und 0,01 ms, insbesondere zwischen 1 ms und 0,1 ms.

Zweckmäßigerweise ist der rückspeisefähige Gleichrichter netzfrequent betrieben. Mit anderen Worten werden die Gleichrichterschaltelemente des rückspeisefähigen Gleichrichters mit der Frequenz angesteuert, die das Wechselstromnetz aufweist. Der elektrische Stromfluss wird zweckmäßigerweise pulsfrequent geregelt oder gesteuert. Mit anderen Worten erfolgt eine pulsfrequente Einstellung des elektrischen Stromflusses und somit die Reduzierung. Auf diese Weise ist eine vergleichsweise genaue Einstellung des elektrischen Stromflusses ermöglicht. Die Frequenz, mittels derer eine Einstellung des elektrischen Stromflusses erfolgt, beträgt hierbei beispielsweise um die 150 kHz.

Geeigneterweise wird eine an der Pufferkapazität anliegende Zwischenkreisspannung im Vergleich zu einer gleichstromseitig an dem rückspeisefähigen Gleichrichter anliegende Ausgangsspannung erhöht. Auf diese Weise ist eine Steuerung bzw. Regelung des elektrischen Stromflusses von der Pufferkapazität zum rückspeisefähigen Gleichrichter stets möglich, unabhängig von der aktuellen Phasenlage der Phasen des elektrischen Stroms des Wechselstromnetzes, auf den aktuell kommutiert ist. Mit anderen Worten ist auch eine Rückspeisung möglich, wenn die Phase, auf die aktuell kommutiert ist, die maximale elektrische Spannung aufweist.

In einer besonders bevorzugten Ausgestaltungsform der Erfindung wird die netzseitige elektrische Spannung überwacht, und bei einem netzseitigen Spannungseinbruch der elektrische Stromfluss zwischen dem rückspeisefähigen Gleichrichter und der Pufferkapazität reduziert. Unter netzseitigem Spannungseinbruch wird insbesondere eine vergleichsweise kurze Reduzierung der elektrischen Spannung zumindest einer der Phasen des Wechselstromnetzes verstanden, wobei die elektrische Spannung von einem Sollwert um mehr als einen bestimmten Schwellwert abweicht, beispielsweise 10 V. Insbesondere wird ein Stromfluss von dem rückspeisefähigen Gleichrichter zur Pufferkapazität reduziert und folglich dem Wechselstromnetz keine weitere Energie entzogen. Auf diese Weise ist eine Belastung des Wechselstromnetzes reduziert. Um dennoch einen sicheren Betrieb aufrecht erhalten zu können, wird vorzugsweise die innerhalb der Pufferkapazität gespeicherte elektrische Energie herangezogen. Die Reduzierung des elektrischen Stromflusses, wenn ein netzseitiger Spannungseinbruch vorliegt, ist unabhängig von der Reduzierung des elektrischen Stromflusses zum Zeitpunkt der Kommutierung und wird insbesondere als unabhängige Erfindung betrachtet.

Der Stromfluss zwischen dem rückspeisefähigen Gleichrichter und der Pufferkapazität, also von dem rückspeisefähigen Gleichrichter zur Pufferkapazität und umgekehrt, wird auf einen Wert reduziert. Dieser Wert ist das Produkt aus einem Modulationsfaktor und einem unreduzierten Stromfluss zwischen dem rückspeisefähigen Gleichrichter und der Pufferkapazität, also dem maximal möglichen Stromfluss zwischen dem rückspeisefähigen Gleichrichter und der Pufferkapazität, der sich dann einstellt, wenn keine Regelung und/oder Einstellung des elektrischen Stromflusses erfolgt. Mit anderen Worten entspricht der unreduzierte Stromfluss dem Spitzenwert des elektrischen Stromes zwischen dem rückspeisefähigen Gleichrichter und der Pufferkapazität. Aufgrund der anliegenden Wechselspannung ist dieser unreduzierte Stromfluss nicht konstant, sondern schwankt bogenförmig zwischen zwei Grenzen, die jedoch stets größer null sind. Der geringste Stromfluss würde hierbei zum Zeitpunkt einer Kommutierung auftreten, sofern der elektrische Stromfluss nicht reduziert ist. Der größte Wert würde hierbei dann auftreten, wenn die elektrische Spannung der Phase, auf die kommutiert ist, den größten Wert aufweist. Insbesondere ist der Modulationsfaktor zwischen null und eins, wobei zum Zeitpunkt der Kommutierung der Modulationsfaktor zweckmäßigerweise gleich null ist, sodass zum Zeitpunkt der Kommutierung im Wesentlichen kein elektrischer Strom über den rückspeisefähigen Gleichrichter fließt. Geeigneterweise wird der Stromfluss stets auf das Produkt aus dem Modulationsfaktor und dem unreduzierten Stromfluss geregelt oder gesteuert, wobei der Modulationsfaktor zum Zeitpunkt der Kommutierung vorzugsweise ein Minimum aufweist.

Aufgrund der Verwendung eines Modulationsfaktors ist die Einstellung des elektrischen Stromflusses vereinfacht, da lediglich die Phasenlage der einzelnen Phasen bekannt sein muss. Sofern zur Bestimmung des Modulationsfaktors eine stetige Funktion herangezogen wird, ist ein Auftreten von Sprüngen im elektrischen Stromfluss vermieden, und daher eine Ausbreitung von ungewollten Schwingungen innerhalb des Wechselstromnetzes unterbunden. Beispielsweise wird der Modulationsfaktor anhand der elektrischen Spannung der Phasen des Wechselstromnetzes berechnet, wobei, sofern mehrere Phasen vorhanden sind, anhand der elektrischen Spannungen der Zeitpunkt der Kommutierung berechnet und eine geeignete, insbesondere periodische, Funktion herangezogen wird, mittels derer sichergestellt ist, dass zum Zeitpunkt der Kommutierung der Modulationsfaktor kleiner als eins ist. Sofern der Modulationsfaktor anhand der elektrischen Spannungen abgeleitet wird, ist eine vergleichsweise robuste und fehlerunanfällige Bestimmung des Modulationsfaktors gegeben.

Zweckmäßigerweise wird als Modulationsfaktor das kleinere Element aus eins (1) und dem Quotienten aus (DCA-DCAmin) und (DCAmax-DCAmin) herangezogen. Mit anderen Worten ist der Modulationsfaktor gleich
min(1; (DCA-DCAmin)/(DCAmax-DCAmin)).

Hierbei entspricht min der Minimumsfunktion, DCA dem unreduzierten Stromfluss, also dem elektrischen Stromfluss, der sich einstellen würde, sofern keine Steuerung bzw. Regelung des elektrischen Stromflusses zwischen dem rückspeisefähigen Gleichrichter und der Pufferkapazität erfolgt. DCAmin entspricht dem unreduzierten Stromfluss zum Zeitpunkt einer Kommutierung, also dem elektrischen Stromfluss, der geschaltet werden würde, sofern keine Reduzierung erfolgen würde. Als DCAmax wird der zeitlich gemittelte unreduzierte Stromfluss herangezogen, also der Stromfluss, der sich zwischen dem rückspeisefähigen Gleichrichter und der Pufferkapazität im zeitlichen Mittel einstellen würde, sofern keine Reduzierung zum Zeitpunkt der Kommutierung erfolgen würde. Hierbei wird der Stromfluss zeitlich über zumindest eine Periode des Wechselstroms gemittelt. Mit anderen Worten entspricht die Länge des zeitlichen Intervalls, das zur zeitlichen Ermittlung herangezogen wird, mindestens der Länge der Periode des an der Wechselstromseite des rückspeisefähigen Gleichrichters anliegenden Wechselstroms, also insbesondere mindestens 0,02 Sek., sofern das Wechselstromnetz eine Frequenz von 50 Hz aufweist. Zweckmäßigerweise wird ein ganzzahliges Vielfaches dieser Periode herangezogen.

Der unreduzierte Stromfluss wird hierbei stets dann ermittelt, wenn eine maximale Belastung des rückspeisefähigen Gleichrichters bestehen würde, also insbesondere, wenn die vollständig mittels des rückspeisefähigen Gleichrichters bereitgestellte Gleichspannung entnommen werden würde oder der vollständig an der Gleichstromseite anliegende Gleichstrom in das Wechselstromnetz zurückgespeist würde, also insbesondere die vollständige innerhalb der Pufferkapazität vorhandene elektrische Energie in kürzest möglicher Zeit zurückgespeist werden sollte, wobei eine Reduzierung des Stromflusses zum Zeitpunkt der Kommutierung nicht erfolgt. Die Ermittlung des Modulationsfaktors auf diese Weise ist vergleichsweise unkompliziert und ohne eine Vielzahl an Sensoren oder Rechnungsvorschriften realisierbar.

Die rückspeisefähige Gleichrichtervorrichtung ist vorzugsweise ein Bestandteil einer Industrieanlage, und weist beispielsweise eine Leistung zwischen 5 kW und 20 kW und vorzugsweise größer als 10 kW auf. Die rückspeisefähige Gleichrichtervorrichtung ist geeignet, zweckmäßigerweise vorgesehen und eingerichtet, an ein Wechselstromnetz angeschlossen zu werden, wobei das Wechselstromnetz insbesondere zwei- oder dreiphasig ausgestaltet ist. Zweckmäßigerweise umfasst das Wechselstromnetz drei zueinander um 120° versetzte Phasen, wobei jede der Phasen einen sinusförmigen elektrischen Stromverlauf aufweist. Die Frequenz ist beispielsweise 50 Hz oder 60 Hz. Vorzugsweise weist jede der der Phasen eine sinusförmige elektrische Wechselspannung mit der gleichen Frequenz auf, wobei die Amplitude zweckmäßigerweise 325 V ist. Insbesondere wird die rückspeisefähige Gleichrichtervorrichtung innerhalb einer Industrieanlage verwendet.

Die rückspeisefähige Wechselrichtervorrichtung umfasst einen rückspeisefähigen Gleichrichter, der eine Gleichstromseite und eine Wechselstromseite aufweist. Die Wechselstromseite ist im Montagezustand elektrisch mit dem Wechselstromnetz kontaktiert. Zwischen der Gleichstromseite und der Wechselstromseite ist vorzugsweise eine Brückenschaltung angeordnet, beispielsweise eine B4- oder eine B6-Schaltung. Jeder der Brückenzweige der Brückenschaltung weist vorzugsweise eine Diode auf, zu der parallel ein Schaltelement (Gleichrichterschaltelement) geschaltet ist, das vorzugsweise ein Halbleiterschalter/Leistungshalbleiterschalter ist. Zweckmäßigerweise sind die Diode und der Halbleiterschalter in einem einzigen Modul vereint. Geeigneterweise weist jeder der Brückenzweige ein IGBT-Modul oder einen MOSFET als Gleichrichterschaltelement auf.

Die rückspeisefähige Gleichrichtervorrichtung umfasst ferner eine Pufferkapazität, die parallel zur Gleichstromseite geschaltet ist. Zwischen die Pufferkapazität und den rückspeisefähigen Gleichrichter ist ein Hochsetzsteller geschaltet. Der Hochsetzsteller ist ein DC/DC-Wandler, mittels dessen eine elektrische Gleichspannung in eine weitere, erhöhte elektrische Gleichspannung transformiert wird. Folglich weist bei Betrieb die Pufferkapazität eine Zwischenkreisspannung, die im Vergleich zu einer an der Gleichrichterseite anliegende Ausgangsspannung erhöht ist. Beispielsweise umfasst der rückspeisefähige Gleichrichter auf der Gleichstromseite einen Zwischenkreiskondensator, also eine weitere Kapazität, an der die Ausgangsspannung anliegt. Diese ist insbesondere vergleichsweise klein ausgestaltet, zumindest kleiner als die Pufferkapazität. Insbesondere wird mittels der Pufferkapazität und dem Hochsetzsteller ein Zwischenkreis gebildet, der bei Betrieb eine im Wesentlichen konstante Zwischenkreisspannung aufweist, und somit zwei Zweige umfasst, von denen einer positiv und der Verbleibende negativ ist. Der positive Zweig weist hierbei im Vergleich zu dem negativen Zweig ein größeres elektrisches Potential auf. Zumindest jedoch umfasst der Zwischenkreis die Pufferkapazität und den Hochsetzsteller.

Aufgrund der erhöhten an der Pufferkapazität anliegender elektrischen Zwischenkreisspannung ist es ermöglicht, einen elektrischen Stromfluss zwischen der Pufferkapazität und dem Wechselstromnetz einzustellen, wobei eine Induktivität nicht erforderlich ist. Somit kann bei einer geeigneten Ansteuerung eine Ausbildung von Schwingungen in dem rückgespeisten Strom vermieden oder zumindest reduziert werden.

Der Hochsetzsteller ist zweckmäßigerweise dem positiven Zweig zugeordnet, so dass das elektrische Potential des positiven Zweigs mittels des Hochsetzstellers erhöht wird. Der negative Zweig des Zwischenkreises ist vorzugsweise mittels der Dioden des rückspeisefähigen Gleichrichters mit dem Wechselstromnetz elektrisch kontaktiert, wobei der (rückspeisefähige) Gleichrichter beispielsweise auf dessen Wechselstromseite kapazitiv gegen Masse, insbesondere Erde, geführt ist. Folglich ist der negative Zweig des Zwischenkreises im Wesentlichen gegen Masse geführt, was zu einer Grundentstörung und folglich einer erhöhten elektromagnetischen Verträglichkeit führt. Auch werden auf diese Weise Ableitströme gegen Masse geführt. Vorzugsweise ist der rückspeisefähige Gleichrichter als ein Modul bereitgestellt und realisiert, insbesondere als sogenannter Spannungszwischenkreisumrichter mit einem schlanken Zwischenkreis. Dieses Modul umfasst beispielsweise den Zwischenkreiskondensator, sofern dieser vorhanden ist. Mit dem Modul ist vorzugsweise ein weiteres Modul elektrisch kontaktiert, welches die Pufferkapazität und den Hochsetzsteller umfasst, und welches folglich - mit Ausnahme des Zwischenkreiskondensators des rückspeisefähigen Gleichrichters, sofern dieser vorhanden ist - im Wesentlichen den Zwischenkreis bildet. Auf diese Weise ist eine modulare Erstellung der rückspeisefähigen Gleichrichtervorrichtung ermöglicht, was Herstellungskosten reduziert. Zudem ist es ermöglicht, auf etwaige bereits bestehende Module zurückzugreifen.

Beispielsweise umfasst die Pufferkapazität einen Kondensator, beispielsweise einen Elektrolytkondensator. Vorzugsweise weist die Pufferkapazität eine elektrische Schaltung zur Vorladung des Kondensators auf, mittels derer bei Beginn des Betriebs der rückspeisefähigen Wechselrichtervorrichtung eine Vorladung des Kondensator erfolgt. Beispielsweise wird hierbei in einem sogenannten Standby-Modus die an dem Kondensator anliegende elektrische Spannung beibehalten. Auf diese Weise ist ein Wechsel des Betriebsmodus der rückspeisefähigen Wechselrichtervorrichtung im Wesentlichen unverzüglich ermöglicht, wobei ein Vorladen der Pufferkapazität über den rückspeisefähigen Gleichrichter nicht erfolgen muss. Somit kann die Pufferkapazität eine vergleichsweise große Kapazität aufweisen, wobei die rückspeisefähige Gleichrichtervorrichtung dennoch im Wesentlichen unverzügliches anspricht.

Die rückspeisefähige Gleichrichtervorrichtung ist gemäß einem Verfahren betrieben, bei dem ein elektrischer Stromfluss zwischen dem rückspeisefähigen Gleichrichter und der Pufferkapazität zum Zeitpunkt einer Kommutierung reduziert wird.

Vorzugsweise ist zwischen die Pufferkapazität und der Gleichstromseite ein erstes steuerbares Schaltelement geschaltet. Die Verschaltung ist hierbei vorzugsweise derart, dass mittels des ersten steuerbaren Schaltelements ein elektrischer Stromfluss von der Gleichrichterseite zur Pufferkapazität und von der Pufferkapazität zur Gleichstromseite gesteuert werden kann. Das erste steuerbare Schaltelement ist beispielsweise ein Bestandteil des Hochsetzstellers und/oder des positiven Zweigs. Insbesondere ist das erste steuerbare Schaltelement ein Halbleiterschaltelement/Leistungshalbleiterschalter, und beispielsweise ein IGBT oder MOSFET, insbesondere ein SiC-MOSFET. Das erste steuerbare Schaltelement ist vorzugsweise bidirektional ausgestaltet. Zusammenfassend ist das erste steuerbare Schaltelement ein bidirektionaler Schalter, wobei beispielsweise das erste steuerbare Schaltelement mittels eines Transistors bereit gestellt ist, zu dem vorzugsweise parallel eine Diode geschaltet ist, mittels derer stets ein Stromfluss von der Gleichrichterseite zur Pufferkapazität ermöglicht ist. Hierbei erfolgt vorzugsweise mittels des Hochsetzstellers ein Hochsetzen der elektrischen Spannung, so dass über die Diode des ersten steuerbaren Schaltelements beispielsweise die an der Gleichrichterseite anliegende Ausgangsspannung oder die im Vergleich hierzu erhöhte Zwischenkreisspannung fließt.

Insbesondere ist das erste steuerbare Schaltelement pulsfrequent betrieben, wobei die maximale Schaltfrequenz beispielsweise größer als 10 kHz und vorzugsweise zwischen 20 kHz und 150 kHz ist. Alternativ oder besonders bevorzugt in Kombination hierzu werden die Gleichrichterschaltelemente des rückspeisefähigen Gleichrichters netzfrequent betrieben. Folglich ist es ermöglicht, die Gleichrichterschaltelemente des rückspeisefähigen Gleichrichters auf vergleichsweise geringe elektrische Durchlassverluste hin zu optimieren. Das erste steuerbare Schaltelement hingegen wird besonders bevorzugt auf geringe Schaltverluste optimiert, weswegen ein Wirkungsgrad der rückspeisefähigen Gleichrichtervorrichtung erhöht ist.

Aufgrund einer derartigen Ansteuerung ändert sich zudem die an der Gleichrichterseite anliegende Ausgangsspannung des rückspeisefähigen Gleichrichters im Wesentlichen lediglich netzfrequent, wobei die Amplitude der Änderung verringert ist. Zusammenfassend wird mittels des ersten steuerbaren Schaltelements ein elektrischer Stromfluss zwischen der Pufferkapazität und dem rückspeisefähigen Gleichrichter eingestellt, was aufgrund der erhöhten Zwischenkreisspannung im Wesentlichen unabhängig von der aktuellen Phasenlage des elektrischen Stroms der jeweiligen Phase erfolgen kann.

Zusammenfassend werden mittels des erste steuerbaren Schaltelements und mittels des Hochsetzstellers bei geeigneter Ansteuerung der Gleichrichterschaltelemente des rückspeisefähigen Gleichrichters, die insbesondere netzfrequent betrieben sind, Systemschwingungen vermieden, da keine weiteren Induktivitäten vorhanden sind. Auch ändert sich eine Zwischenkreisspannung/Ausgangsspannung lediglich mit der dreifachen Netzfrequenz gegen Masse, sofern die negativen Zweige des Zwischenkreises mittels der Dioden des rückspeisefähigen Gleichrichters gegen Erde geführt sind, beispielsweise kapazitiv. Infolgedessen sind Ableitströme gegen Masse verringert. Zum Beispiel wird zur Einstellung des Stromflusses ein Regler herangezogen. Mit anderen Worten ist das erste steuerbare Schaltelement mittels eines Reglers gesteuert, insbesondere mittels eines PI-Reglers.

Beispielsweise umfasst der Hochsetzsteller einen Aufwärtswandler, wobei vorzugsweise einer der Zweige des Zwischenkreises eine Induktivität umfasst. Insbesondere weist der positive Zweig die Induktivität auf, beispielsweise in Form einer Spule oder einer Drossel, und die insbesondere mit einer Diode in Reihe geschaltet ist. Beispielsweise ist die Diode und die Induktivität mittels einer weiteren Diode und einem veränderbaren Widerstand überbrückt, der beispielsweise einstellbar ist. Die beiden Zweige selbst sind mittels eines zweiten steuerbaren Schaltelements kurzschließbar. Das zweite steuerbare Schaltelement ist vorzugsweise ein Halbleiterschaltelement, insbesondere ein Leistungshalbleiterschalter, wie ein Feldeffekttransistor, insbesondere ein MOSFET oder ein IGBT. Geeigneterweise ist das zweite steuerbare Schaltelement baugleich zu dem ersten steuerbaren Schaltelement, sofern dieses vorhanden ist.

Bei Betrieb werden mittels Schließen des zweiten steuerbaren Schaltelements die beiden Zweige des Zwischenkreises kurzgeschlossen und somit die Induktivität aufgeladen. Bei einem Öffnen des zweiten steuerbaren Schaltelements wird die Induktivität über die Diode auf die Pufferkapazität entladen. Mittels eines derartigen Aufwärtswandlers ist mit vergleichsweise wenigen Bauteilen der Hochsetzsteller realisiert, was zu einem vergleichsweise kostengünstigen und robusten Hochsetzsteller führt.

In einer Alternative hierzu umfasst der Hochsetzsteller einen Electronic Smoothing Inductor, den insbesondere einer der Zweige des Zwischenkreises umfasst. Der Electronic Smoothing Inductor (ESI) weist eine Brückenschaltung auf, wobei zwei Ausgänge der Brückenschaltung mittels eines Kondensators, insbesondere als Elektrolytkondensators, miteinander elektrisch kontaktiert sind. Zweckmäßigerweise umfasst hierbei der Hochsitzsteller ebenfalls eine Induktivität, wie eine Spule und/oder Drossel, die zweckmäßigerweise auf der dem rückspeisefähigen Gleichrichter zugewandten Seite der Brückenschaltung angeordnet ist. Insbesondere ist mittels des Electronic Smoothing Inductors auch das erste steuerbare Schaltelement bereitgestellt, so dass sämtliche Brückenzweige der B4-Schaltung des bidirektionalen Electronic Smoothing Inductors jeweils steuerbare Schaltelemente aufweist, die insbesondere mittels Halbleiterschalter realisiert sind. Bei Betrieb wird mittels Ansteuerung der steuerbaren Schaltelemente zunächst der Kondensator des Electronic Smoothing Inductors geladen, welche bei einer geänderten Ansteuerung auf die Pufferkapazität entladen wird, wobei die elektrische Spannung erhöht wird.

Vorzugsweise umfasst der Hochsetzsteller eine Drossel, mittels derer eine Induktivität bereitgestellt wird. Die Drossel dient hierbei als Speicher von elektrischer Energie, die zur Erhöhung der elektrischen Spannung vorzugsweise mittels eines geeigneten Schaltelements an die Pufferkapazität abgegeben wird. Die Drossel weist insbesondere eine Induktivität zwischen 100 µH und 500 µH auf. Insbesondere ist die Induktivität kleiner als 500 µH, 400 µH, 300 µH. Geeigneterweise wird eine derartige Drossel bei einer Leistung der rückspeisefähigen Gleichrichtervorrichtung von zwischen 5 kW und 10 kW herangezogen. Auf diese Weise ist ein vergleichsweise platzsparender Hochsetzsteller realisiert.

Vorzugsweise umfasst die Pufferkapazität zwei in Reihe geschaltete Pufferkondensatoren, die beispielsweise jeweils als Elektrolytkondensator ausgeführt sind. Aufgrund der Reihenschaltung können auch bei einer vergleichsweise großen Zwischenkreisspannung Kondensatoren mit einer vergleichsweise geringen Spannungsfestigkeit herangezogen werden, was Herstellungskosten reduziert. Der Mittelpunkt dieser Reihenschaltung, also die beiden miteinander elektrisch kontaktierten Elektroden der Pufferkondensatoren, ist geeigneterweise gegen Masse geführt, insbesondere kapazitiv. Mit anderen Worten ist das zwischen den beiden Kondensatoren gebildete elektrische Potential kapazitiv gegen Masse geführt, uns insbesondere gleich Masse. Auf diese Weise ist eine weitere Entstörung der rückspeisefähigen Gleichrichtervorrichtung gegeben, was eine elektromagnetische Verträglichkeit weiter erhöht.

Die Industrieanlage weist eine rückspeisefähige Gleichrichtervorrichtung zum Anschluss an ein Wechselstromnetz auf. Mittels der rückspeisefähigen Gleichrichtervorrichtung ist es ermöglicht, überschüssige elektrische Energie zurück in das Wechselstromnetz zu speisen. Die rückspeisefähige Gleichrichtervorrichtung umfasst einen rückspeisefähigen Gleichrichter und eine zu der Gleichstromseite des rückspeisefähigen Gleichrichters parallel geschaltete Pufferkapazität. Zwischen die Pufferkapazität und den rückspeisefähigen Gleichrichter ist ein Hochsetzsteller geschaltet. Alternativ oder in Kombination hierzu wird ein elektrischer Stromfluss zwischen dem rückspeisefähigen Gleichrichter und der Pufferkapazität zum Zeitpunkt einer Kommutierung reduziert. Mittels der rückspeisefähigen Gleichrichtervorrichtung ist somit auch bei vergleichsweise großen Leistungen ein Ausbilden von Schwingungen im Wechselstromnetz aufgrund einer Rückspeisung mittels der rückspeisefähigen Gleichrichtervorrichtung unterbunden. Die Industrieanlage weist insbesondere eine Leistung zwischen 5 kW und 250 kW auf. Zweckmäßigerweise ist die Leistung der Industrieanlage größer als 10 kW und beispielsweise kleiner als 200 kW.

Die im Zusammenhang mit den im Verfahren zum Betrieb der rückspeisefähigen Gleichrichtervorrichtung gemachten Ausführungen und Weiterbildungen sind sinngemäß auch auf die rückspeisefähige Gleichrichtervorrichtung und die Industrieanlage zu übertragen und umgekehrt.

Ausführungsbeispiele der Erfindung werden anhand einer Zeichnung näher erläutert. Darin zeigen:
- FIG 1: Schematisch eine Industrieanlage mit einer rückspeisefähigen Gleichrichtervorrichtung,
- FIG 2: einen Schaltplan einer ersten Ausführungsform der rückspeisefähigen Gleichrichtervorrichtung,
- FIG 3: gemäß FIG 2 eine weitere Ausführungsform der rückspeisefähigen Gleichrichtervorrichtung,
- FIG 4: eine Pufferkapazität der rückspeisefähigen Gleichrichtervorrichtung,
- FIG 5: ein Verfahren zum Betrieb einer rückspeisefähigen Gleichrichtervorrichtung,
- FIG 6: einen unreduzierten Stromfluss innerhalb der rückspeisefähigen Gleichrichtervorrichtung,
- FIG 7: einen zeitlichen Verlauf sowohl eines Modulationsfaktors als auch von elektrischen Phasenspannungen und eines unreduzierten Stromfluss.

Einander entsprechende Teile sind in allen Figuren mit dem gleichen Bezugszeichen versehen.

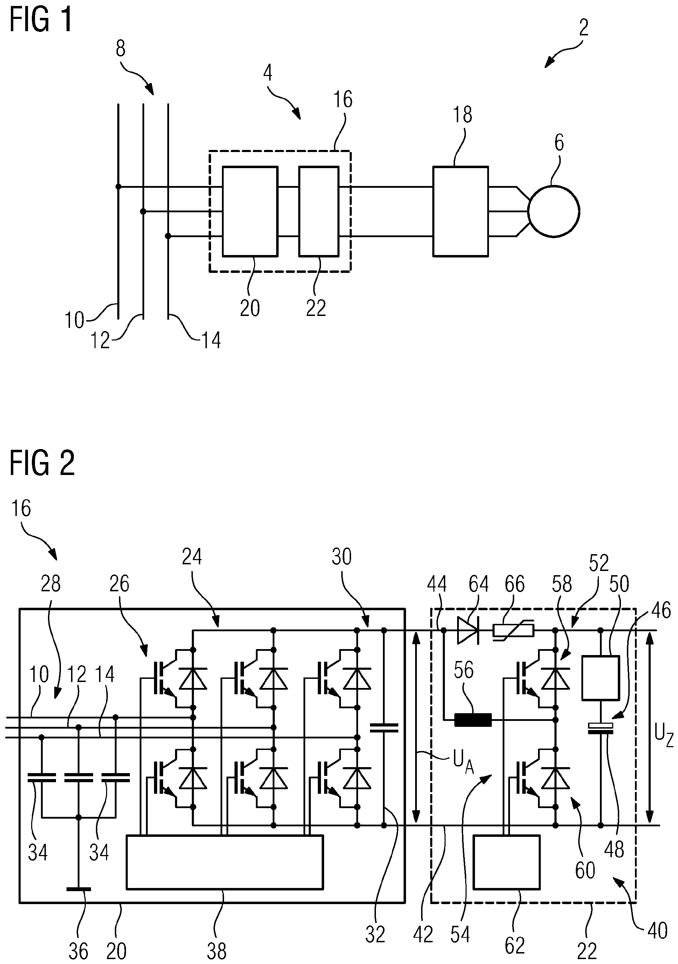

In FIG 1 ist eine Industrieanlage 2 mit einem Umrichter 4 dargestellt, der eine Leistung größer als 10 kW und beispielsweise gleich 100 kW aufweist. Mittels des Umrichters 4 ist ein Elektromotor 6 betrieben. Der Elektromotor 6 dient dem Antrieb eines nicht näher dargestellten Aktors der Industrieanlage 2. Der Umrichter 4 ist elektrisch zwischen den Elektromotor 6 und ein Wechselstromnetz 8 geschaltet, das eine erste Phase 10, eine zweite Phase 12 und eine dritte Phase 14 aufweist, auch als L1, L2, L3 bezeichnet. Jede der drei Phasen 10, 12, 14 führt eine sinusförmige Wechselspannung und einen Wechselstrom, mit jeweils einer Frequenz von 50 Hz, wobei die drei Phasen jeweils zueinander um 120° versetzt sind.

Die Amplitude der den sinusförmigen Wechselstrom bedingenden sinusförmigen Wechselspannung ist jeweils 325 V.

Der Umrichter 4 weist eine rückspeisefähige Gleichrichtervorrichtung 16 auf, die mit den drei Phasen 10, 12, 14 des Wechselstromnetzes 8 direkt elektrisch kontaktiert ist. Die rückspeisefähige Gleichrichtervorrichtung 16 ist somit zwischen das Wechselstromnetz 8 und einen Wechselrichter 18 des Umrichters 4 geschaltet. Mittels der rückspeisefähigen Gleichrichtervorrichtung 16 wird ein Gleichstrom bereitgestellt, der mittels des Wechselrichters 18 in einen Wechselstrom transformiert wird, der dem Betrieb des Elektromotors 6 dient. Der mittels des Wechselrichters 18 erstellte Wechselstrom ist auf die Drehzahl und Leistung des Elektromotors 6 angepasst.

Die rückspeisefähige Gleichrichtervorrichtung 16 umfasst ein erstes Modul 20 sowie ein zweites Modul 22, die in FIG 2 näher dargestellt sind. Das erste Modul 20 umfasst einen rückspeisefähigen Gleichrichter 24, der eine B6-Schaltung umfasst. Die B6-Schaltung ist mittels sechs Gleichrichterschaltelementen 26 erstellt, die jeweils SiC-MOSFETs mit parallel geschalteter Freilaufdiode sind. Hierbei sind jeweils zwei der Gleichrichterschaltelemente 26 mit einer der Phasen 10, 12, 14 elektrisch kontaktiert, wobei mittels der Dioden eine Gleichrichtung der mittels der Phasen 10, 12, 14 geführten und an der Wechselstromseite 28 anliegenden Wechselspannung zu einer Gleichspannung erfolgt, die auf einer Gleichstromseite 30 des rückspeisefähigen Gleichrichters 24 anliegt, und die gleich einer Ausgangsspannung Ua ist. Folglich ist die B6-Schaltung zwischen der Wechselstromseite 28 und der Gleichstromseite 30.

Das erste Modul 20 weist ferner einen Zwischenkreiskondensator 32 mit einer vergleichsweise kleinen Kapazität auf. Auf der Wechselstromseite 28 ist jede der Phasen 10, 12, 14 mittels jeweils eines Erdungskondensators 34 kapazitiv gegen Masse 36 geführt. Das erste Modul 20 umfasst zudem eine Ansteuerschaltung 38, mittels derer eine Beaufschlagung der Gleichrichterschaltelemente 26 erfolgt. Dies erfolgt in Abhängigkeit von aktuellen Anforderungen an den Elektromotor 6 sowie der Phasenlage des mittels der jeweiligen Phasen 10, 12, 14 geführten Wechselstroms bzw. deren Wechselspannung. Mittels der Ansteuerschaltung 38 wird hierbei der Schaltzustand der Gleichrichterschaltelemente 26 verändert, also auch ein Durchlass in Sperrrichtung der jeweiligen Freilaufdiode ermöglicht. Dies erfolgt vorzugsweise netzfrequent. Das erste Modul 20 ist zweckmäßigerweise mittels einer sogenannten F3E-Topologie realisiert, und weist einen vergleichsweise kleinen Zwischenkreiskondensator 32, also einen schlanken Zwischenkreis auf.

Auf der Gleichrichterseite 30 ist dem Zwischenkreiskondensator 32 das zweite Modul 22 parallel geschaltet, welches mit dem Zwischenkreiskondensator 32 im Wesentlichen einen Zwischenkreis 40 des Umrichters 4 bildet. Der Zwischenkreis 40 weist einen negativen Zweig 42 und einen positiven Zweig 44 auf, wobei das mittels des positiven Zweigs 44 geführte elektrische Potential größer als das elektrische Potential des negativen Zweigs 42 ist. Das elektrische Potential des negativen Zweigs 42 ist aufgrund der Freilaufdioden des rückspeisefähigen Gleichrichters 24 und der Erdungskondensatoren 34 im Wesentlichen gleich dem von Masse 36.

Zwischen den negativen Zweig 42 und den positiven Zweig 44 ist eine Pufferkapazität 46 geschaltet, die somit parallel zur Gleichstromseite 30 des rückspeisefähigen Gleichrichters 24 geschaltet ist. Die Pufferkapazität 46 weist in diesem Beispiel einen ersten Elektrolytkondensator 48 auf. Die Pufferkapazität 46 umfasst eine Vorladungsschaltung 50, mittels derer eine Aufladung des ersten Elektrolytkondensators 48 unabhängig von dem ersten Modul 20 erfolgen kann. Das zweite Modul 22 umfasst ferner einen Hochsetzsteller 52 mit einem Aufwärtswandler 54, der eine in den positiven Zweig 44 geschaltete Drossel 56 mit einer Induktivität von 150 µH aufweist. Zwischen die Drossel 56 und die Pufferkapazität 46 ist ein erstes steuerbares Schaltelement 58 geschaltet, welches somit in Reihe mit der Drossel 56 geschaltet ist. Somit ist das erste steuerbare Schaltelement 58, das ein SiC-MOSFET ist, zwischen die Pufferkapazität 46 und die Gleichstromseite 30 geschaltet.

Zwischen dem ersten steuerbaren Schaltelement 58 und der Drossel 56 ist ein Anschluss eines zweiten steuerbaren Schaltelements 60 elektrisch kontaktiert, dessen weiterer Anschluss mit dem negativen Zweig 42 elektrisch kontaktiert ist. Das zweite steuerbare Schaltelement 60 ist baugleich zu dem ersten steuerbaren Schaltelement 58 und wird ebenso wie dieses mittels einer Regelschaltung 62 mit Schaltsignalen beaufschlagt, die einen PI-Regler umfasst.

Die Drossel 56 und das erste Schaltelement 58 sind ferner mittels einer Diode 64 und einem hierzu in Reihe geschalteten veränderbaren Widerstand 66 überbrückt, wobei die Diode 64 und das erste steuerbare Schaltelement 58, welches ein bidirektionales Schaltelement ist, in geöffnetem Zustand einen Stromfluss von der Pufferkapazität 46 zur Gleichrichterseite 30 unterbinden. Mittels des Hochsetzstellers 52 erfolgt bei Betrieb eine Spannungsanhebung, weswegen die an der Gleichrichterseite 30 anliegende Ausgangsspannung Ua, die an den Zwischenkreiskondensator 32 anliegt, kleiner ist als eine Zwischenkreisspannung Uz, die an der Pufferkapazität 46 anliegt.

Bei Betrieb des Aufwärtswandlers 54 wird zunächst die Pufferkapazität 46 auf die Ausgangsspannung Ua aufgeladen, wobei die Drossel 56 ebenfalls geladen wird. Das erste Schaltelement 58 ist derart angesteuert, dass lediglich ein Stromfluss von der Gleichrichterseite 30 zur Pufferkapazität 46 ermöglicht ist. Mit anderen Worten ist das erste Schaltelement 58 geöffnet. Anschließend wird das zweite Schaltelement 60 derart angesteuert, dass der positive Zweig 44 und der negative Zweig 42 kurzgeschlossen werden. Infolgedessen tritt ein Stromfluss auf, und die Drossel 56 wird geladen. Sobald die Drossel 56 geladen ist, wird das zweite steuerbare Schaltelement 60 geöffnet. Infolgedessen entlädt sich die Drossel 56 über das erste steuerbare Schaltelement 58 auf die Pufferkapazität 46, deren Spannung somit erhöht wird.

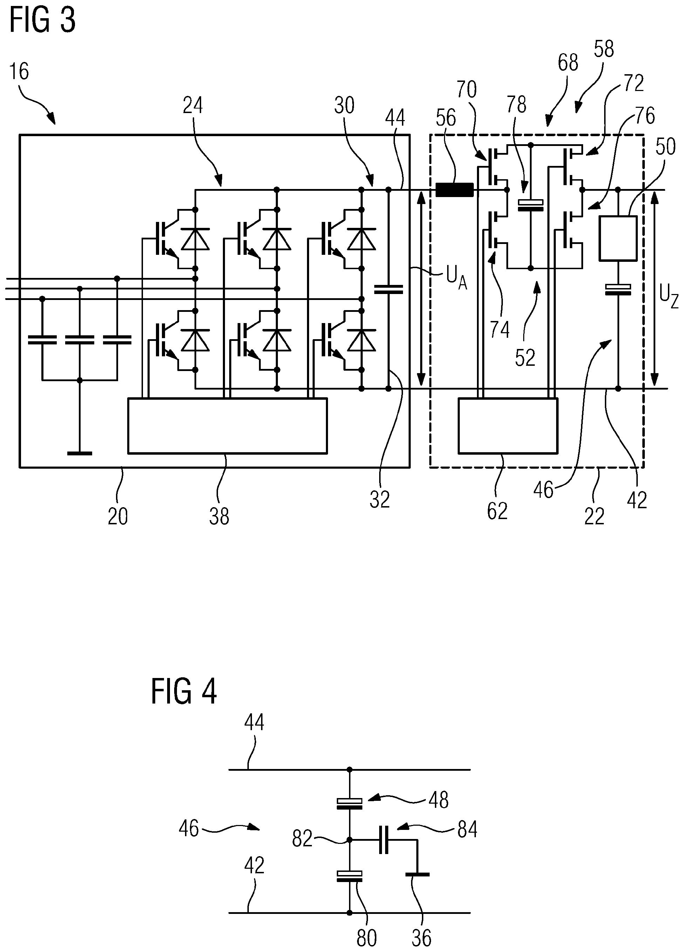

In FIG 3 ist eine Abwandlung der rückspeisefähigen Gleichrichtervorrichtung dargestellt, wobei das erste Modul 20 unverändert belassen wurde. Auch die Pufferkapazität 46 wurde nicht verändert. Lediglich der Hochsetzsteller 52 ist abgewandelt und weist nunmehr anstatt des Aufwärtswandlers 54 einen in den positiven Zweig 44 eingebrachten bidirektionalen Electronic Smoothing Inductor 68 auf, der eine B4-Schaltung umfasst, die in Reihe zu der unverändert belassenen Drossel 56 geschaltet ist. Der Electronic Smoothing Inductor 68 weist für die Brückenschaltung einen ersten Halbleiterschalter 70 und einen zweiten Halbleiterschalter 72 auf, die zueinander in Reihe und parallel zu einem dritten Halbleiterschalter 74 und einem vierten Halbleiterschalter 76 geschalten sind, die wiederum miteinander in Reihe geschaltet sind. Die auf diese Weise erstellten Zweige des Electronic Smoothing Inductors 68 sind mit einem Kondensator 78 miteinander elektrisch kontaktiert, dessen eine Elektrode mit dem ersten und zweiten Halbleiterschalter 70, 72 und dessen verbleibende Elektrode mit dem dritten und vierten Halbleiterschalter 74, 76 elektrisch kontaktiert ist.

Der erste, zweite und dritte Halbleiterschalter 70, 72, 74, 76 stellen ferner auch das erste steuerbare Schaltelement 58 dar, mittels dessen ein Stromfluss zwischen der Pufferkapazität 46 und der Gleichrichterseite 30 eingestellt werden kann. Die Halbleiterschalter 70, 72, 74, 76 sind wiederum mittels der Regelschaltung 62 mit Schaltsignalen beaufschlagt. Zur Erzeugung der im Vergleich zur Ausgangsspannung Ua erhöhten Zwischenkreisspannung Uz werden beispielsweise sämtliche Halbleiterschalter 70, 72, 74, 76 elektrisch leitend geschaltet, was zu einer Ladung der Drossel 56 führt. Der Kondensator 78 ist hierbei nicht geladen. Im Anschluss hieran werden der zweite und dritte Halbleiterschalter 72, 74 elektrisch nichtleitend geschalten, weswegen der Kondensator 78 mittels der Diode 74 geladen wird. Sobald die Drossel 56 entladen ist, werden der zweite und dritte Halbleiterschalter 72, 74 leitend und der erste und vierte Halbleiterschalter 70, 76 nichtleitend geschalten, woraufhin der Kondensator 78 sich auf die Pufferkapazität 46 entlädt, was zu der erhöhten Zwischenkreisspannung Uz führt.

In FIG 4 ist eine weitere Ausgestaltungsform der Pufferkapazität 46 dargestellt, wobei die Vorladungsschaltung 50 nicht gezeigt ist, die jedoch auch vorhanden sein kann. Die Pufferkapazität 46 weist einen ersten Elektrolytkondensator 48 und einen zweiten Elektrolytkondensator 80 auf, die miteinander in Reihe geschaltet sind, und die Pufferkondensatoren der Pufferkapazität 46 bilden. Zwischen den beiden Pufferkondensatoren ist ein Mittelpunkt 82 gebildet, dessen elektrisches Potential somit dem elektrischen Potential jeweils einer der Elektroden der beiden Pufferkondensatoren 48, 80 entspricht. Der Mittelpunkt 82 ist mittels eines zweiten Erdungskondensators 84 kapazitiv gegen Masse 36 geführt.

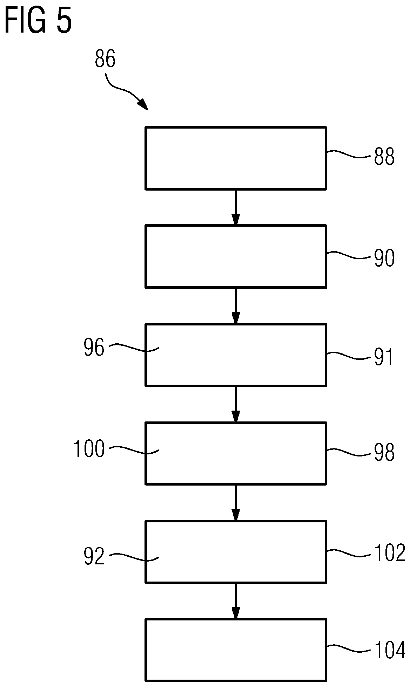

In FIG 5 ist ein Verfahren 86 zum Betrieb der rückspeisefähigen Gleichrichtervorrichtung 16 gezeigt. In einem ersten Arbeitsschritt 88 wird mittels des Hochsetzstellers 52 die Ausgangsspannung Ua, die an der Gleichrichterseite 30 des rückspeisefähigen Gleichrichters 24 anliegt, auf die Zwischenkreisspannung Uz hochgesetzt, wofür der Electronic Smoothing Inductor 68 bzw. der Aufwärtswandler 54 geeignet betrieben werden. Hierfür wird zweckmäßigerweise die Regelschaltung 62 herangezogen. Das zweite steuerbare Schaltelement 60 bzw. die Halbleiterschalter 70, 72, 74, 76 werden hierfür zweckmäßigerweise pulsfrequent angesteuert.

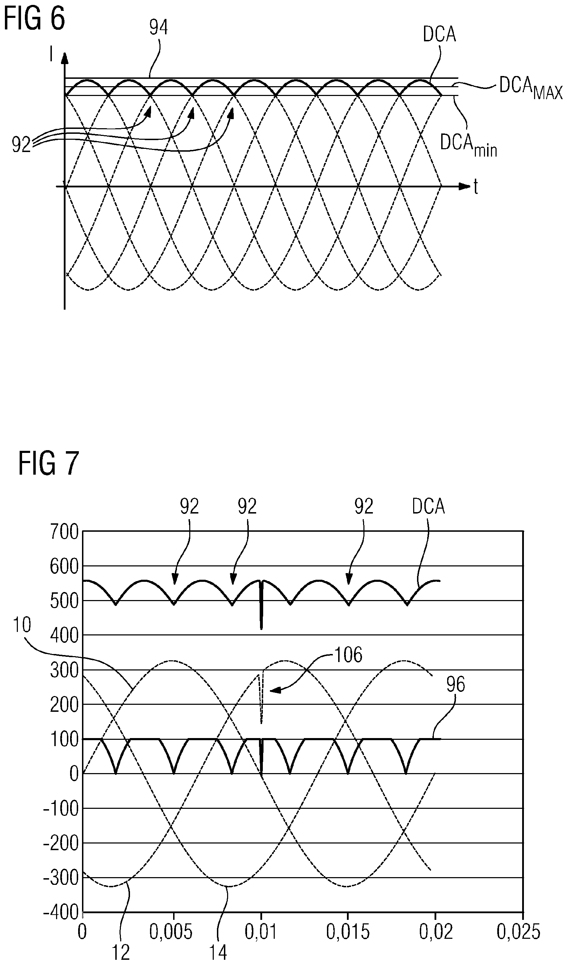

In einem sich anschließenden zweiten Arbeitsschritt 90 wird bestimmt, dass ein Rückstrom aus der Pufferkapazität 46 in das Wechselstromnetz 8 mittels des rückspeisefähigen Gleichrichters 24 erfolgen soll. Der positive Zweig 44 und der negative Zweig 42 sind hierbei mittels eines der Gleichrichterschaltelemente 26 mit einer der Phasen 10, 12, 14 elektrisch kontaktiert. In einem sich anschließenden dritten Arbeitsschritt 91 wird ein unreduzierter Stromfluss DCA bestimmt, der in FIG 6 als Funktion der Zeit dargestellt ist. Der unreduzierte Stromfluss DCA würde sich ergeben, wenn die Gleichrichterschaltelemente 26 derart angesteuert würden, dass zwischen den Phasen 10, 12, 14 hartkommutiert werden würde. Mit anderen Worten sind jeweils Zeitpunkte 92 gebildet, an denen mittels der Gleichrichterschaltelemente 26 der positive Zweig 44 bzw. der negative Zweig 42 von einer der Phasen 10, 12, 14 auf eine weitere der Phasen 10, 12, 14 umgeschaltet wird, und somit eine niederohmige elektrische Verbindung zwischen diesen erstellt wird. Zum Zeitpunkt der Kommutierung (Kommutierungszeitpunkt) 92 würde hierbei ein unreduzierter Stromfluss DCAmin anliegen, der mittels der Gleichrichterschaltelemente 26 geschaltet werden würde, und der bis zu 100 Ampere betragen könnte. Der unreduzierte Stromfluss DCA verläuft somit zwischen dem unreduzierten Stromfluss DCAmin und einem Spitzenwert 94, wobei der zeitliche Verlauf sich im Wesentlichen mit der dreifachen Netzfrequenz des Wechselstromnetzes 8 ändert. Der zeitliche Mittelwert des unreduzierten Stromflusses DCA wird als DCAmax herangezogen. Anhand der ermittelten Stromflüsse DCA, DCAmin, DCAmax wird ein Modulationsfaktor 96 ermittelt, der in FIG 7 dargestellt ist. Dieser wird anhand der Gleichung
min(1; (DCA-DCAmin)/(DCAmax-DCAmin))
bestimmt, wobei "min" die Minimumsfunktion bezeichnet. Der Modulationsfaktor 96 liegt stets somit zwischen null und eins.

In einem sich anschließenden vierten Arbeitsschritt 98 wird ein Wert 100 erstellt, der das Produkt aus dem unreduzierten Stromfluss DCA und dem Modulationsfaktor 96 ist. Mittels der Regelschaltung 62 wird der Stromfluss zwischen der Pufferkapazität 46 und der Gleichrichterseite 30 des rückspeisefähigen Gleichrichters 24 auf diesen Wert 100 geregelt, wofür das erste steuerbare Schaltelement 58 geeignet angesteuert wird. Dieses wird insbesondere pulsfrequent angesteuert, was eine vergleichsweise feine Einstellung des elektrischen Stromflusses erlaubt. Die verwendete Frequenz ist zwischen 0 kHz und bis 150 kHz.

Sofern der Stromfluss größer als der zeitlich gemittelte unreduzierte Stromfluss DCAmax ist, ist das erste steuerbare Schaltelement derart angesteuert, dass keine Reduzierung des Stromflusses erfolgt. Mit anderen Worten befindet sich das steuerbare Schaltelement 58 in einem elektrisch leitenden Zustand. Sobald der unreduzierte Stromfluss DCA kleiner als der zeitlich gemittelte reduzierte Stromfluss DCAmax ist, wird mittels der Regelschaltung 62 aufgrund des Modulationsfaktors 96 der tatsächliche Stromfluss stärker abgesenkt, wofür das erste steuerbare Schaltelement 58 mit einer bestimmten Pulsfrequenz beaufschlagt wird. Hierbei wirken der Zwischenkreiskondensator 32 und die Drossel 56 glättend, weswegen der tatsächlich fließende elektrische Strom im Wesentlichen kontinuierlich abnimmt.

In einem sich anschließenden fünften Arbeitsschritt 102 erfolgt die Kommutierung 92. Hierbei werden die Gleichrichterschaltelemente 26 mittels der Ansteuerschaltung 38 derart angesteuert, dass die bisher elektrisch leitenden Gleichrichterschaltelemente 26 in einen elektrisch nicht leitenden und zwei weitere der Gleichrichterschaltelemente 26 in einen elektrisch leitenden Zustand überführt werden. Aufgrund des Modulationsfaktors 96 ist zu diesem Zeitpunkt 92 der tatsächliche Stromfluss 0 A, so dass im Wesentlichen kein Schaltverlust innerhalb des rückspeisefähigen Gleichrichters 24 auftritt.

In einem sich hieran anschließenden sechsten Arbeitsschritt 104 erfolgt erneut eine Erhöhung des elektrischen Stromflusses, da der Modulationsfaktor 96 erneut größer als null ist. Während der Rückspeisung werden die Gleichrichterschaltelemente 26 netzfrequent betrieben. Mit anderen Worten erfolgen Änderungen der Schaltzustände der Gleichrichterschaltelemente 26 lediglich zum Zeitpunkt der Kommutierung 92. Solange die Rückspeisung andauert, wird der elektrische Stromfluss mittels der Regelschaltung 62 auf den Wert 100 geregelt, wobei sich der Modulationsfaktor 96 entsprechend ändert.

Sofern ein netzseitiger Spannungseinbruch 106 auftritt, der beispielsweise in FIG 7 gezeigt ist, wobei die zweite Phase 12 eine vergleichsweise kurze Verringerung der elektrischen Spannung aufweist, ist aufgrund der Heranziehung des unreduzierten Stromflusses DCA zur Berechnung des Modulationsfaktors 96 der Wert 100 gleich 0 A. Somit wird dem Wechselstromnetz 8 keine elektrische Energie entnommen, auch dann nicht, wenn eigentlich ein Speisen der Pufferkapazität 46 mittels des Wechselstromnetzes 8 erfolgt. Infolgedessen ist eine Belastung des Wechselstromnetzes 8 reduziert.

Aufgrund der Verwendung des Modulationsfaktors 96 ist die Stromaufnahme der rückspeisefähigen Gleichrichtervorrichtung 16 vergleichsweise gering belastend für das Wechselstromnetz 8, da einerseits vergleichsweise geringe Stromoberwellen vorhanden sind. Andererseits wird aufgrund eines nachgeahmten "ohmschen" Verhaltens dieses nicht belastet, sofern ein netzseitiger Spannungseinbruch 106 vorliegt. Ein Betrieb des Elektromotors 6 ist hierbei mittels der Pufferkapazität 46 ermöglicht.

Zusammenfassend können die Gleichrichterschaltelemente 26 des ersten Moduls 20 auf vergleichsweise geringe Durchlassverluste hin optimiert werden, da diese im Wesentlichen netzsynchron geschaltet werden. Die Halbleiterschalter des zweiten Moduls 22 hingegen werden pulsfrequent getaktet, und sind auf möglichst geringe Schaltverluste hin optimiert. Mittels der rückspeisefähigen Gleichrichterschaltung 16 ändert sich zudem die Zwischenkreisspannung Uz gegen Masse 36 lediglich mit der dreifachen Netzfrequenz, da der negative Zweig 42 mittels der Dioden und der Erdungskondensatoren 34 gegen Masse 36 geführt ist. Die Amplitude der Änderung ist hierbei vergleichsweise gering und Ableitströme werden ebenfalls gegen Masse 36 geführt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen, wie er durch die beigefügten Patentansprüche festgelegt ist.

## Patentansprüche

1. Verfahren (86) zum Betrieb einer rückspeisefähigen Gleichrichtervorrichtung (16), insbesondere einer Industrieanlage (2), zum Anschluss an ein Wechselstromnetz (8), mit einem rückspeisefähigen Gleichrichter (24), und mit einer zu der Gleichstromseite (30) des rückspeisefähigen Gleichrichters (24) parallel geschalteten Pufferkapazität (46), wobei ein elektrischer Stromfluss zwischen dem rückspeisefähigen Gleichrichter (24) und der Pufferkapazität (46) zum Zeitpunkt einer Kommutierung (92) reduziert wird,
wobei zwischen die Pufferkapazität (46) und den rückspeisefähigen Gleichrichter (24) ein Hochsetzsteller (52) geschaltet ist, dessen Halbleiterschalter (58, 60; 70, 72, 74, 76) mittels einer Regelschaltung (62) mit Schaltsignalen beaufschlagt werden,
wobei zur Reduzierung der Stromfluss zwischen dem rückspeisefähigen Gleichrichter (24) und der Pufferkapazität (46) auf einen Wert (100) geregelt oder gesteuert wird, der das Produkt aus einem Modulationsfaktor (96) und einem unreduzierten Stromfluss (DCA) ist,
wobei, solange eine Rückspeisung andauert, der elektrische Stromfluss mittels der Regelschaltung (62) auf den Wert (100) geregelt wird, und
wobei sich der Modulationsfaktor (96) entsprechend des Verlaufs des unreduzierten Stromflusses (DCA) zwischen null und eins ändert.

2. Verfahren (86) nach Anspruch 1,
bei dem ein elektrischer Stromfluss von der Pufferkapazität (46) zur Gleichstromseite (30) reduziert wird.

3. Verfahren (86) nach Anspruch 2,
bei dem der elektrische Stromfluss auf 0 A reduziert wird.

4. Verfahren (86) nach einem der Ansprüche 1 bis 3,
bei dem eine an der Pufferkapazität (46) anliegende Zwischenkreisspannung (Uz) im Vergleich zu einer gleichstromseitig an dem rückspeisefähigen Gleichrichter (24) anliegenden Ausgangsspannung (Ua) erhöht wird.

5. Verfahren (86) nach einem der Ansprüche 1 bis 4,
wobei bei einem netzseitigen Spannungseinbruch (106) der elektrische Stromfluss zwischen dem rückspeisefähigen Gleichrichter (24) und der Pufferkapazität (46) reduziert wird.

6. Verfahren (86) nach einem der Ansprüche 1 bis 5,
wobei als Modulationsfaktor (96) das kleinere Element aus Eins (1) und dem Quotienten (DCA-DCAmin)/(DCAmax-DCAmin) herangezogen wird, wobei
- DCA dem unreduzierten Stromfluss,
- DCAmin dem unreduzierten Stromfluss zum Zeitpunkt einer Kommutierung (92) und
- DCAmax dem zeitlich gemittelten unreduzierten Stromfluss entspricht.

7. Rückspeisefähige Gleichrichtervorrichtung (16), insbesondere einer Industrieanlage (2), zum Anschluss an ein Wechselstromnetz (8), mit einem rückspeisefähigen Gleichrichter (24), und mit einer zu der Gleichstromseite (30) des rückspeisefähigen Gleichrichters (24) parallel geschalteten Pufferkapazität(46), wobei zwischen die Pufferkapazität (46) und den rückspeisefähigen Gleichrichter (24) ein Hochsetzsteller (52) geschaltet ist, und die nach einem Verfahren (86) nach einem der Ansprüche 1 bis 6 betrieben ist.

8. Rückspeisefähige Gleichrichtervorrichtung (16) nach Anspruch 7,
**dadurch gekennzeichnet, dass** zwischen der Pufferkapazität (46) und der Gleichstromseite (30) ein erstes steuerbares Schaltelement (58) geschaltet ist, das insbesondere pulsfrequent betrieben ist.

9. Rückspeisefähige Gleichrichtervorrichtung (16) nach Anspruch 7 oder 8,
**dadurch gekennzeichnet, dass** der Hochsetzsteller (52) einen Aufwärtswandler (54) oder einen Electronic Smoothing Inductor (68) umfasst, und/oder dass der Hochsetzsteller (52) eine Drossel (56) mit einer Induktivität zwischen 100 µH zu 500 µH umfasst.

10. Rückspeisefähige Gleichrichtervorrichtung (16) nach einem der Ansprüche 7 bis 9,
**dadurch gekennzeichnet, dass** die Pufferkapazität (46) zwei in Reihe geschaltete Pufferkondensatoren (48, 80) aufweist, deren Mittelpunkt (82) kapazitiv gegen Masse (36) geführt ist.

11. Industrieanlage (2) mit einer rückspeisefähige Gleichrichtervorrichtung (16), die nach einem Verfahren (86) gemäß einem der Ansprüche 1 bis 6 betrieben ist, und die eine Leistung zwischen 5 kW und 250 kW aufweist, insbesondere zwischen 10 kW und 200 kW.

## Claims

1. Method (86) for operating an energy recovery rectifier device (16), in particular for an industrial plant (2), for connection to an AC system (8), comprising an energy recovery rectifier (24) and a buffer capacitor (46) that is connected in parallel with the DC side (30) of the energy recovery rectifier (24), wherein an electrical current flow between the energy recovery rectifier (24) and the buffer capacitor (46) is reduced at the time of a commutation (92),
wherein a step-up converter (52) is connected between the buffer capacitor (46) and the energy recovery rectifier (24), with switching signals being applied to the semiconductor switches (58, 60; 70, 72, 74, 76) of said step-up converter by means of a control circuit (62),
wherein, for reduction purposes, the current flow between the energy recovery rectifier (24) and the buffer capacitor (46) is regulated or controlled to a value (100) which is the product from a modulation factor (96) and an unreduced current flow (DCA),
wherein, for as long as the recovery of energy persists, the electrical current flow is regulated by means of the control circuit (62) to the value (100), and
wherein the modulation factor (96) changes between zero and one according to the variation of the unreduced current flow (DCA).

2. Method (86) according to claim 1,
wherein an electrical current flow from the buffer capacitor (46) to the DC side (30) is reduced.

3. Method (86) according to claim 2,
wherein the electrical current flow is reduced to 0 A.

4. Method (86) according to one of claims 1 to 3,
wherein a DC link voltage (Uz) present at the buffer capacitor (46) is increased compared to an output voltage (Ua) present at the energy recovery rectifier (24) on the DC side.

5. Method (86) according to one of claims 1 to 4,
wherein the electrical current flow between the energy recovery rectifier (24) and the buffer capacitor (46) is reduced in the event of a system-side voltage dip (106).

6. Method (86) according to one of claims 1 to 5,
wherein the smaller element from one (1) and the quotient (DCA-DCAmin)/(DCAmax-DCAmin) is used as the modulation factor (96), wherein
- DCA corresponds to the unreduced current flow,
- DCAmin corresponds to the unreduced current flow at the time of a commutation (92), and
- DCAmax corresponds to the time-averaged unreduced current flow.

7. Energy recovery rectifier device (16), in particular for an industrial plant (2), for connection to an AC system (8), comprising an energy recovery rectifier (24) and a buffer capacitor (46) that is connected in parallel with the DC side (30) of the energy recovery rectifier (24), wherein a step-up converter (52) is connected between the buffer capacitor (46) and the energy recovery rectifier (24), and which is operated according to a method (86) according to one of claims 1 to 6.

8. Energy recovery rectifier device (16) according to claim 7, **characterised in that** a first controllable switching element (58), which is operated in particular at a pulse frequency, is connected between the buffer capacitor (46) and the DC side (30).

9. Energy recovery rectifier device (16) according to claim 7 or 8,
**characterised in that** the step-up converter (52) comprises a boost converter (54) or an electronic smoothing inductor (68), and/or **in that** the step-up converter (52) comprises a choke (56) having an inductance between 100 µH and 500 µH.

10. Energy recovery rectifier device (16) according to one of claims 7 to 9,
**characterised in that** the buffer capacitor (46) comprises two buffer capacitor elements (48, 80) connected in series, the midpoint (82) of which is conducted capacitively to ground (36).

11. Industrial plant (2) comprising an energy recovery rectifier device (16) which is operated according to a method (86) according to one of claims 1 to 6, and which has a power output between 5 kW and 250 kW, in particular between 10 kW and 200 kW.

## Revendications

1. Procédé (86) pour faire fonctionner un système (16) redresseur apte à l'alimentation en retour, notamment d'une installation (2) industrielle, pour la connexion à un réseau (8) de courant alternatif, comprenant un redresseur (24) apte à l'alimentation en retour et comprenant une capacité (46) tampon, montée en parallèle avec le côté (30) du courant continu du redresseur (24) apte à l'alimentation en retour, un flux de courant électrique entre le redresseur (24) apte à l'alimentation en retour et la capacité (46) tampon étant réduit à l'instant d'une commutation (92), dans lequel, entre la capacité (46) tampon et le redresseur (24) apte à l'alimentation en retour, est monté un convertisseur (52) élévateur, dont les interrupteurs (58, 60 ; 70, 72, 74, 76) à semi-conducteur sont alimentés en signaux de coupure au moyen d'un circuit (62) de réglage, dans lequel, pour réduire le flux de courant entre le redresse (24) apte à l'alimentation en retour et la capacité (46) tampon, on règle ou on commande à une valeur, qui est le produit d'un facteur (96) de modulation par un flux (DCA) de courant non réduit,
dans lequel, tant que dure une alimentation en retour, on règle le flux de courant électrique à la valeur (100) au moyen du circuit (62) de réglage, et
dans lequel le facteur (96) de modulation varie entre zéro et un conformément à la courbe du flux (DCA) de courant non réduit.

2. Procédé (86) suivant la revendication 1,
dans lequel on réduit un flux de courant électrique de la capacité (46) tampon au côté (30) de courant continu.

3. Procédé (86) suivant la revendication 2,
dans lequel on réduit le flux de courant électrique à 0 A.

4. Procédé (86) suivant l'une des revendications 1 à 3,
dans lequel on augmente une tension (Uz) de circuit intermédiaire, s'appliquant à la capacité (46) tampon, par rapport à une tension (Ua) de sortie, s'appliquant du côté du courant continu au redresseur (24) apte à l'alimentation en retour.

5. Procédé (86) suivant l'une des revendications 1 à 4,
dans lequel, s'il se produit un effondrement (106) de la tension du côté du réseau, on réduit le flux de courant électrique entre le redresseur (24) apte à l'alimentation en retour et la capacité (46) tampon.

6. Procédé (86) suivant l'une des revendications 1 à 5,
dans lequel on recourt, comme facteur (96) de modulation, à l'élément le plus petit entre un (1) et le quotient (DCA-DCAmin)/(DCAmax-DCAmin), dans lequel
- DCA correspondant au flux de courant non réduit,
- DCAmin correspondant au flux de courant non réduit à l'instant d'une commutation (92) et
- DCAmax correspondant au flux de courant non réduit en moyenne dans le temps.

7. Système (16) redresseur apte à l'alimentation en retour, notamment d'une installation (2) industrielle, pour la connexion à un réseau (8) de courant alternatif, comprenant un redresseur (24) apte à l'alimentation en retour, et comprenant une capacité (46) tampon montée en parallèle avec le côté (30) de courant continu du redresseur (24) apte à l'alimentation en retour, dans lequel, entre la capacité (46) tampon et le redresseur (24) apte à l'alimentation en retour, est monté un convertisseur (52) élévateur, et qui fonctionne selon un procédé (86) suivant l'une des revendications 1 à 6.

8. Système (16) redresseur apte à l'alimentation en retour suivant la revendication 7,
**caractérisé en ce qu'**entre la capacité (46) tampon et le côté (30) de courant continu, est monté un premier élément (58) de coupure, qui peut être commandé et qui fonctionnement notamment en fréquence de répétition des impulsions.

9. Système (16) redresseur suivant la revendication 7 ou 8, **caractérisé en ce que** le convertisseur (52) élévateur comprend un convertisseur (54) élévateur ou un Electronic Smoothing Inductor (68), et/ou **en ce que** le convertisseur (52) élévateur comprend une bobine (56) ayant une inductance comprise entre 100 µH et 500 µH.

10. Système (16) redresseur suivant l'une des revendications 7 à 9,
**caractérisé en ce que** la capacité (46) tampon a deux condensateurs (48, 80) tampons montés en série, dont le point (82) milieu est mis capacitivement à la masse (36).

11. Installation (2) industrielle ayant un système (16) redresseur apte à l'alimentation en retour, qui fonctionne selon un procédé (86) suivant l'une des revendications 1 à 6 et qui a une puissance comprise entre 5 kW et 250 kW, notamment entre 10 kW et 200 kW.
